# EUROPÄISCHE PATENTSCHRIFT

(11) **EP 1 753 061 B1**
(45) Veröffentlichungstag und Bekanntmachung des Hinweises auf die Patenterteilung: **30.11.2011**
(21) Anmeldenummer: 06013442.6
(22) Anmeldetag: 29.06.2006
(51) Int. Cl.: H01M 8/04, H01M 8/06, C01B 3/38

(54) **Verfahren zum Starten einer Brennstoffzellenanlage**
Method for start-up of a fuel-cell installation
Procédé pour mettre en route une installation à piles à combustible

(30) Priorität: 30.06.2005 DE 102005030909
(43) Veröffentlichungstag der Anmeldung: 14.02.2007
(73) Patentinhaber: Viessmann Werke GmbH & Co KG, 35107 Allendorf (DE)
(72) Erfinder: Lorenz, Christian, 35108 Allendorf (DE)
(74) Vertreter: Wolf, Michael

(56) Entgegenhaltungen:
- EP-A- 1 386 883
- EP-A1- 1 501 147
- EP-A2- 1 182 723
- EP-A2- 1 273 553
- US-A1- 2002 071 975
- US-A1- 2003 087 138

## Beschreibung

Die Erfindung betrifft ein Verfahren zum Starten einer Brennstoffzellenanlage nach dem Oberbegriff des Patentanspruchs 1.

In der DE 102 35 430 A1 ist ein Reformer-Brennstoffzellen-System und ein Verfahren zum Starten und Abschalten desselben beschrieben. Im stationären Betrieb werden dabei einem Reformer Kohlenwasserstoffgas und Wasserdampf als Edukte zur Umwandlung in Wasserstoff und weitere Reformer-Produkte zugeführt. Die Reformer-Produkte werden anschließend zur chemischen Aufbereitung einer dem Reformer nachgeschalteten Shift-Stufe und einer weiteren Stufe zur selektiven Oxidation zugeführt (also mindestens einer Katalysatorstufe). Schließlich werden der Wasserstoff und Luft einer den Katalysatorstufen nachgeschalteten Brennstoffzelle zugeführt. Dabei ist zwischen der letzten Katalysatorstufe und der Brennstoffzelle ein Umschaltventil vorgesehen, mit dem der gesamte Gasstrom wahlweise über eine Leitung zur Brennstoffzelle oder über eine Umgehungsleitung an der Brennstoffzelle vorbei geleitet werden kann, und zwar letzteres in dem Fall, wenn der Gasstrom noch Bestandteile enthält, die für die Brennstoffzelle schädlich wären (bei sogenannten PEM-Brennstoffzellen insbesondere Kohlenmonoxid).

Bei der genannten Lösung wird zum Starten der Anlage mit dem Reformer zunächst ein inertes Gas durch stöchiometrische Reaktion von Kohlenwasserstoffen mit Sauerstoff, Luft und/oder Wasser erzeugt. Mit diesem inerten Gas wird dann die Brennstoffzelle gespült. Nach dem Spülen erfolgt eine Umleitung des Gasstromes an der Brennstoffzelle vorbei und eine Umstellung des Reformerprozesses auf eine unterstöchiometrische Reaktion zur Erzeugung eines wasserstoffhaltigen Gases, das dann wiederum der Brennstoffzelle zugeführt wird.

Das Abschalten der Anlage folgt in analoger Weise, d. h. nach Einstellung der unterstöchiometrischen Reaktion zur Erzeugung eines wasserstoffhaltigen Gases wird mittels einer stöchiometrischen Reaktion von Kohlenwasserstoffen mit Sauerstoff, Luft und/oder Wasser wiederum ein inertes Gas zum Spülen der Brennstoffzelle erzeugt.

Wie der Reformer selbst gestartet bzw. abgeschaltet wird, ist der DE 102 35 430 A1 nicht zu entnehmen.

Der Erfindung liegt die Aufgabe zugrunde, ein Verfahren zum Starten einer Brennstoffzellenanlage anzugeben, bei dem der Reformer sowie die mindestens eine Katalysatorstufe möglichst schnell aufheizbar sind, und zwar insbesondere bei Vermeidung einer Kondensatbildung beim Aufheizen.

Diese Aufgabe wird mit einem Verfahren zum Starten einer Brennstoffzellenanlage der eingangs genannten Art durch die im Kennzeichen des Patentanspruchs 1 aufgeführten Merkmale gelöst.

Nach der Erfindung ist also zum Starten der Anlage vorgesehen, dass dem Reformer und der Katalysatorstufe in einer ersten Startphase ausschließlich erwärmte Luft, in einer zweiten Startphase neben der Luft auch Wasserdampf, in einer dritten Startphase ausschließlich Wasserdampf und in einer vierten Startphase zum Übergang in den stationären Betrieb Kohlenwasserstoffgas und Wasserdampf zugeführt wird.

Wesentlich für die Erfindung ist somit, der jeweils gezielte Einsatz von Luft und Wasserdampf in der Startphase.

Dabei dient mit dem Reformerbrenner erwärmte Luft, die eine relativ geringe Wärmekapazität hat, einerseits gleich beim Starten dazu, den Reformer und die Katalysatorstufe von Umgebungstemperatur auf etwas über 100°C zu erwärmen. Andererseits wird die Anlage beim Abschalten in der letzten Phase mit relativ kühler Luft gespült, um alle brennbaren bzw. giftigen Gase aus der Anlage zur entfernen.

Sobald bzw. solange die Anlage mindestens eine Temperatur oberhalb von 100°C hat, dient Wasserdampf mit seiner höheren Wärmekapazität dazu, einerseits beim Starten der Anlage den Reformer und die Katalysatorstufe auf auf die erforderliche Betriebstemperatur zu bringen. Beim Abschalten der Anlage dient der Wasserdampf andererseits dazu, die Luftspülung vorzubereiten, d. h. insbesondere Gase (vorallem Wasserstoff) aus dem System zu treiben, die mit der Spülluft zu einer unerwünschten Reation führen könnten.

Zum Starten der Brennstoffzellenanlage ist ferner vorteilhaft vorgesehen, dass während der ersten bis dritten Startphase die Luft und der Wasserdampf an der Brennstoffzelle vorbeigeführt werden, d. h. diese beiden Stoffströme werden, was unten noch genauer beschrieben wird, an der Brennstoffzelle vorbei gebypasst und anschließend energetisch vorteilhaft einem Reformerbrenner zugeführt.

Diese Bypass-Schaltung wird frühestens mit Beginn der vierten Startphase umgeschaltet, d. h. vorzugsweise ist insbesondere vorgesehen, dass der Wasserstoff ab Ende der vierten Startphase (also wenn die zum Betrieb der Brennstoffzelle erforderliche Menge an Wasserstoff tatsächlich zur Verfügung steht) der Brennstoffzelle zugeführt wird.

Damit die Brennstoffzelle bereits Betriebstemperatur hat, wenn der Wasserstoff zugeführt wird, ist ferner vorgesehen, dass diese mit einem separaten Wärmekreislauf vorheizt wird, und zwar spätestens ab Beginn der vierten Startphase, regelmäßig allerdings bereits früher.

Zum Abschalten der Brennstoffzellenanlage ist darüber hinaus vorgesehen, dass während der zweiten und dritten Abschaltphase die Luft bzw. der Wasserdampf an der Brennstoffzelle vorbeigeführt werden, d. h. gebypasst werden. Die bzw. der während dieser beiden Abschaltphasen an der Brennstoffzelle vorbeigeführte(r) Luft bzw. Wasserdampf wird danach vorzugsweise einem Reformerbrenner zugeführt.

Analog zum Startverfahren ist ferner vorgesehen, dass der Wasserstoff höchstens bis zum Ende der ersten Abschaltphase, vorzugsweise sogar nur bis zum Beginn der ersten Abschaltphase der Brennstoffzelle zugeführt wird.

Andere vorteilhafte Weiterbildungen ergeben sich aus den abhängigen Patentansprüchen.

Der Vollständigkeit halber wird noch auf die DE 101 27 199 A1 verwiesen. Bei dieser wird zum Starten eine Mischung aus Brennstoff und Luft ("magere Mischung") zugeführt, und zwar deshalb, um den hier verwendeten autothermen Reformierungsprozess (nach der Erfindung ist im Gegensatz dazu ein völlig anderen Prinzipien folgender Dampfreformierungsprozess vorgesehen) bereits zur Wasserstoffproduktion zu nutzen. - Würde man bei der Lösung nach der Erfindung gleichzeitig Brennstoff und Luft zuführen, käme es zu einer unkontrollierten Oxidation des Brennstoffs verbunden mit einer unzulässigen Temperaturerhöhung und damit zu einer eventuellen Beschädigung des Katalysators, d. h. die DE 101 27 199 A1 ist im Zusammenhang mit der Erfindung nicht relevant.

EP 1 273 553 offenbart eine Methode zum Aufheizen eines Reformers mit entweder Luft oder Wasserdampf.

Die erfindungsgemäßen verfahren zum Starten einer Brennstoffzellenanlage einschließlich ihrer vorteilhaften weiterbildungen gemäß der abhängigen Patentansprüche werden nachfolgend anhand der zeichnerischen Darstellung eines bevorzugten Ausführungsbeispiels näher erläutert.

Es zeigt
- Figur 1: einen Schaltplan der Brennstoffzellenanlage zur Durchführung der Verfahren zum Starten und Abschal- ten des Systems;
- Figur 2: ein Diagramm zur Darstellung der Stoffströme beim Starten der Brennstoffzellenanlage (dargestellt ist der Massenstrom mₚᵤₙₖₜ über der Zeit t); und
- Figur 3: ein Diagramm zur Darstellung der Stoffströme beim Abschalten der Brennstoffzellenanlage.

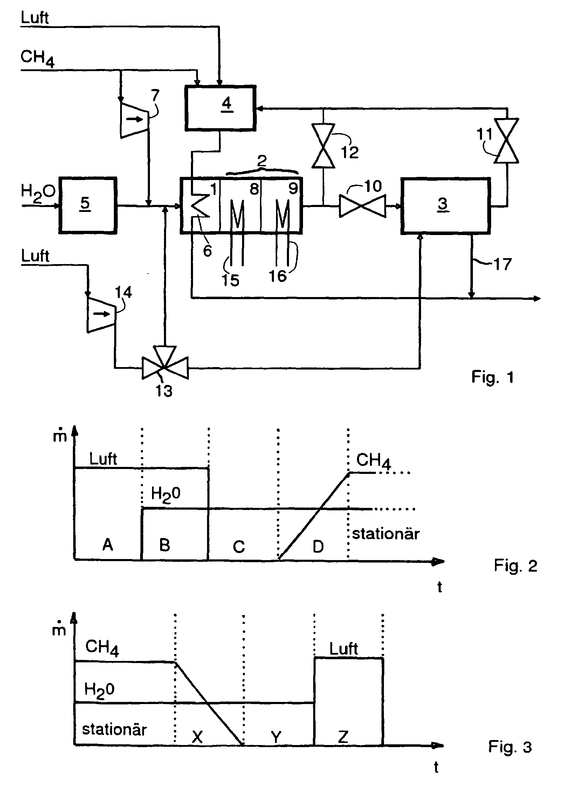

In den Figuren 1 bis 3 ist eine Methode zum Aufheizen (Starten) und Herunterfahren (Abschalten) eines Brennstoffzellensystems (BZ-System) dargestellt. Mit Verweis auf Figur 1 besteht das BZ-System im Wesentlichen aus einem Gaserzeugungssystem (GES: Reformer 1, Shift- und Methanisierungsstufe [Katalysatorstufe 2]), einer Brennstoffzelle 3 (Stack), einem Reformerbrenner 4 (Brenner) und einem Dampfgenerator 5. Der Brenner stellt durch Verbrennung von Erdgas (Kohlenwasserstoffgas) und Anodenrestgas mit Luft die für die Reformierung im (Dampf-) Reformer 1 nötige Energie zur Verfügung, die in Wärmetauscher 6 vom Brennerabgas an den Reformierungskatalysator übertragen wird.

Im Reformer 1 reagiert Erdgas (Kohlenwasserstoffgas), das von der Förderkomponente 7 (z. B. Radialgebläse, Membranpumpe o. ä.) auf einem passenden Druckniveau gefördert wird, mit wasserdampf, der aus flüssigem Wasser durch den Dampfgenerator 5 unter Energiezufuhr erzeugt wird, in einer endothermen chemischen Reaktion zu einem wasserstoffreichen Gas (Reformat). Dieses Reformat enthält neben Wasserstoff (H₂) auch noch eine nennenswerte Menge an Kohlenmonoxid (CO), das ein Gift für den Katalysator des Stacks darstellt und in den Gasreinigungsstufen 2 entfernt wird. Mit dem Bezugszeichen 8 kann beispielsweise ein Katalysator gemeint sein, an dem die Wassergas-Shift-Reaktion abläuft, in der CO mit H₂O in einer exothermen chemischen Reaktion zu für den Stack unschädlichem CO₂ und H₂ reagiert. Mit dem Bezugszeichen 9 kann beispielsweise ein Katalysator gemeint sein, an dem die Methanisierungs-Reaktion abläuft, in der CO mit H₂ in einer exothermen chemischen Reaktion zu für den Stack unschädlichem CH₄ und H₂O reagiert. Mit diesen beiden Katalysatorstufen kann der CO-Gehalt des Reformats auf eine für den Stack unschädliche Konzentration reduziert werden. Diese Anordnung ist dabei nur ein Beispiel, es gibt verschiedene andere bekannte Möglichkeiten der Reformatreinigung.

Der Stack wird mit dem gereinigten Reformat für die Anodenseite und mit Luft für die Kathodenseite versorgt. Zum erwünschten Ablauf der chemischen Reaktionen im GES und im Stack sind neben anderen Randbedingungen vor allem bestimmte Temperaturen notwendig, die über der normalen Umgebungstemperatur liegen (Reformer etwa 600°C, Shift und Methanisierung etwa 240°C, Stack etwa 70°C).

Die Erfindung betrifft, wie erläutert, ein einfaches Verfahren zum Aufheizen des Systems auf geeignete Betriebstemperaturen. Durch das beschriebene, einfache Verfahren ist weiterhin ein sehr schnelles Aufheizen des Systems auf Betriebstemperatur möglich. Außerdem ist die Anzahl an zusätzlichen Komponenten zur Aufheizung und zum Herunterfahren des Systems sehr gering. Ferner ist es mit dem Verfahren möglich, die während des Aufheizvorgangs enstehenden Mengen an brennbaren bzw. giftgen Gasen innerhalb des Systems unschädlich und sogar teilweise zur Aufheizung des Systems nutzbar zu machen.

Im Betrieb befindet sich in den Reaktoren und in vielen Rohrleitungen etc. giftiges bzw. brennbares Gas (CO und H₂), außerdem Wasserdampf. Vor dem Abschalten des Systems müssen aus sicherheitstechnischen Gründen die brennbaren bzw. giftigen Gase aus dem System entfernt werden. Ferner muss der Wasserdampf aus dem System entfernt werden, bevor die Temperatur im System unter den Taupunkt der in den Reaktoren befindlichen Gase fällt (das System kühlt in einer bestimmten Zeit nach dem Abschalten auf die Umgebungstemperatur, z. B. 15 °C, ab). Würde eine nennenswerte Menge an Wasserdampf im System verbleiben, nachdem die Abschaltung erfolgte, würde unterhalb der Taupunktstemperatur der Wasserdampf auskondensieren, es würde sich also flüssiges Wasser bilden. Flüssiges Wasser wirkt schädigend auf einen Teil der im System verwendeten Katalysatoren, so dass im Sinne einer möglichst hohen Lebensdauer ein Kondensieren von Wasser innerhalb des Systems verhindert werden muss.

Eine Kondensation von Wasser ist auch während des Aufheizvorgangs möglich, da eines der beiden Edukte der Reformierung Wasserdampf ist. Wenn also beim Beginn der Wasserdampfdosierung mittels des Dampfgenerators 5 stromabwärts im System eine zu niedrige Temperatur (niedriger als die entsprechende Taupunktstemperatur) herrscht, kann ein Teil des Wasserdampfs in diesen Bereichen kondensieren, d. h. es bildet sich flüssiges Wasser, was, wie oben beschrieben, kritisch für die Katalysatoren sein kann.

Ein weiteres Problem des Aufheizvorgangs stellt der Beginn der Erdgasdosierung in das GES dar, wenn die Aufheizung des GES nicht mit einem Inertgas stattfindet. Die Bereitstellung eines Inertgases zum Aufheizen des GES ist kostenintensiv und benötigt Bauraum, außerdem wird im Normalbetrieb der Anlage kein Inertgas benötigt.

Nach der Erfindung findet die Aufheizung des GES mit Luft statt. Die zum Start der Reformierungsreaktion notwendige Temperatur liegt über der Selbstentzündungstemperatur von Erdgas-Luft-Gemischen (etwa 500 °C), außerdem fördern die meisten der im GES zum Einsatz kommenden Katalysatoren auf Edelmetallbasis die Oxidation von brennbaren Gasen, d. h. die Selbstentzündungstemperatur von Brenngas-Luft-Gemischen (z. B. Erdgas-Luft, Wasserstoff-Luft) wird stark herabgesetzt. Würde eine Aufheizung mit Luft bis auf Betriebstemperatur der Katalysatoren erfolgen, und dann direkt nachfolgend der Start der Erdgas- und Wasserdampfdosierung, fände eine spontane Entzündung des Erdgases mit der noch im System befindlichen Luft an den Katalysatoren statt, was mit einer starken Temperaturerhöhung der Katalysatoren verbunden wäre. Diese Temperaturerhöhung könnte zu einer Schädigung der Katalysatoren führen.

### Startverfahren

Zu Beginn des Aufheizens beträgt die Temperatur im gesamten System Umgebungstemperatur, also z. B. 15-20°C. Die Ventile 10, 11 (2-Wege Magnetventile, andere Betätigungsarten sind möglich) sind geschlossen, Ventil 12 ist geöffnet. Auf diese Weise kann ein Gasstrom über Ventil 12 im Bypass am Stack vorbei direkt in den Brenner 4 strömen. Die Ventile 10 und 11 können auch als ein einziges 3/2-Wege Ventil (wie z. B. Ventil 13) ausgeführt werden, wodurch sich die Anzahl an Ventilen im System verringert.

Das 3/2-Wege Ventil 13 ist beim Starten derart eingestellt, dass die von der Förderkomponente 14 (nachfolgend Luftgebläse genannt) geförderte Luft über eine Leitung in das GES strömt. Gleichzeitig wird mit dem Luftgebläse der Brenner 4 gestartet. Der Brenner wird in diesem Betriebszustand mit reinem Erdgas betrieben. Der Brenner beinhaltet ein Saugzuggebläse, das die Luft und das Erdgas für den Brennerbetrieb ansaugt. Sobald der Brenner 4 in Betrieb ist, erzeugt er ein heißes Brennerabgas, bestehend aus CO₂, Wasserdampf, Stickstoff und Restsauerstoff.

Die Luft, die vom Luftgebläse 14 über das Ventil 13 gefördert wird, strömt also über eine Leitung zum GES (dieser Luftstrom wird nachfolgend Heizluft genannt). Dabei strömt die Heizluft direkt durch alle Katalysatoren und sonstigen Komponenten des GES. Da das heiße Brennerabgas durch den Wärmetauscher 6 innerhalb des Reformers 1 strömt, erwärmt sich die Heizluft; ausserdem wird der Reformerkatalysator durch das Brennerabgas erwärmt. Die Heizluft trägt also einen gewissen Wärmestrom weiter stromabwärts in die übrigen GES-Komponenten, die dem Reformerkatalysator nachgeschaltet sind.

Gleichzeitig mit dem Luftgebläse 14 und dem Brenner 4 werden die elektrischen Heizungen 15 und 16 eingeschaltet. Diese Heizungen erwärmen die dem Reformerkatalysator nachgelagerten sonstigen Katalysatoren (z. B. die erwähnten Shift- und Methanisierungskatalysatoren), um diese möglichst schnell auf Betriebstemperatur zu bringen. Damit wird der Nachteil des geringen Wärmekapazitätsstroms der Heizluft ausgeglichen, der eine deutlich längere Aufheizzeit zur Folge hätte, würde er allein zur Aufheizung der Shift- und der Methanisierungsstufe genutzt werden.

Der Wärmekapazitätsstrom der Heizluft ist dabei durch mehrere Faktoren begrenzt (z. B. Druckverlust über GES und die zur Verfügung stehende Luftgebläseleistung). Die Heizluft strömt, nachdem sie das GES passiert hat, über eine Leitung durch das Ventil 12 und weiter durch eine Leitung in den Brenner 4. Der Brenner 4 saugt die Heizluft an und verwendet diese zur Erdgasverbrennung.

Wenn durch die im letzten Abschnitt beschriebene Aufheizung des GES mit Luft an der kältesten Stelle des GES eine Temperatur überschritten wird, die der Siedetemperatur von Wasser unter den Systembedingungen entspricht (z. B. 100°C bei 1013 mbar), wird die Wasserdosierung in den Dampfgenerator 5 gestartet. Die Energie zur Verdampfung des flüssigen Wassers im Dampfgenerator kann z. B. aus überschüssiger Energie des Brennerabgases bereitgestellt werden. Alternativ kann der Dampfgenerator auch separat mit Energie (z. B. durch separate Verbrennung von Erdgas oder elektrische Energie) versorgt werden. Die Temperatur des Wasserdampfes sollte deutlich über der unter Systembedingungen geltenden Siedetemperatur liegen, damit die Möglichkeit der Kondensation sicher ausgeschlossen werden kann. Das GES wird nun mit der Heizluft und dem Wasserdampf durchströmt, was den Wärmekapazitätsstrom innerhalb des GES erhöht und dadurch eine schnellere Erwärmung als mit der Heizluft allein ermöglicht. Wie die Heizluft, so wird auch der Wasserdampf beim Durchströmen des Reformerkatalysators erhitzt und trägt damit zur Erwärmung der stromabwärts gelegenen GES-Komponenten bei. Die Temperaturen im GES steigen deshalb mit fortschreitender Zeit an.

Diese zweite Startphase wird so lange fortgesetzt, bis in allen GES-Komponenten und im Stack geeignete Starttemperaturen erreicht sind. Um dies zu detektieren, können z. B. in allen relevanten Komponenten Temperatursensoren angebracht werden, deren Signale zur Steuerung der Aufheizphasen genutzt werden (Steuerung und Auswertung der Sensorsignale über eine nicht dargestellte Prozess-CPU).

Sobald in allen Systemkomponenten geeignete Starttemperaturen erreicht sind, wird die Heizluft abgeschaltet. Die Wasserdampfdosierung wird fortgesetzt, dieser Vorgang wird nachfolgend auch Wasserdampfspülung (dritte Startphase) genannt.

Da das gesamte GES nunmehr eine weit über der Wasser-Siedetemperatur liegende Temperatur aufweist, strömt nun nur noch der Wasserdampf durch das GES. Der Wasserdampf verdrängt die noch im GES befindliche Luft und befördert sie über das Ventil 12 in den Brenner (wie in der ersten und zweiten Startphase).

Die Wasserdampfspülung wird so lange aufrechterhalten, bis die gesamte im GES befindliche Luft verdrängt wurde. Die dafür erforderliche Zeit ergibt sich in Abhängigkeit vom Wasserdampfmassenstrom, der mittleren Temperatur im GES und dem GES-Volumen. Die Einhaltung dieser Zeit kann über einen Timer (Prozess-CPU) sichergestellt werden.

Mit fortschreitender Zeit in der dritten Startphase tritt über die Leitung vor den Ventilen 10 und 12 immer weniger Luft und immer mehr Wasserdampf aus dem GES aus, bis schließlich nach Ablauf der genannten Spühlzeit reiner Wasserdampf austritt. Um Probleme mit kondensierendem Wasserdampf im Brenner zu vermeiden, kann in die Leitungsstücke vor dem Brenner ein Kondensator inklusive Tropfenabscheider integriert werden, der den Wasserdampf vor Eintritt in den Brenner teilweise oder vollständig kondensiert.

Wenn die Luft aus dem GES verdrängt wurde, kann die Reformierung starten, indem mit der Erdgasdosierung über die Erdgasförderkomponente 7 (Gaspumpe) begonnen wird (Vermischung des Erdgases mit Wasserdampf und Eintritt des Gemisches in das GES). Da kein Luftsauerstoff mehr im GES vorhanden ist, sind auf diese Weise Probleme mit unkontrollierter Erdgasoxidation (s. o.) und dem damit verbundenen schädlichen Temperaturanstieg in den Katalysatoren vermeidbar.

Die Erdgasmenge wird sinnvollerweise über eine Rampenfunktion langsam von Null auf einen bestimmten Endwert hochgefahren (siehe Figur 2). Damit erreicht man einen Start der Reformierung bei einem S/C-Verhältnis von "unendlich", was sich günstig auf die CO-Konzentration des Reformats auswirkt. Das S/C-Verhältnis stellt das Stoffmengenverhältnis von Wasserdampf (Steam) zum im Erdgas enthaltenen Kohlenstoff (Carbon) dar. Grundsätzlich gilt: Je höher S/C, desto geringer die bei der Reformierung/Shiftreaktion enstehende CO-Menge, bzw. CO-Konzentration.

Durch das extrem hohe S/C-Verhältnis zu Beginn der Reformierung ist die Reformatqualität praktisch sofort "stacktauglich", welche hauptsächlich durch die CO-Konzentration definiert ist. Aus diesem Grund kann das Reformat mit Start der Reformierung durch entsprechende Steuerung der Ventile 10, 11 und 12 auf den Stack geschaltet werden.

Solange der Reformatmassenstrom nicht konstant ist (Rampenfunktion bei Start der Reformierung), kann der (ebenfalls separat vorgeheizte) Stack noch keinen Strom liefern. Deshalb wird zuerst kein Wasserstoff im Stack verbraucht und das Reformat strömt über das Ventil 11 in den Brenner 4. Durch eine Luftzahlregelung des Brenners kann dieser in geeigneter Weise auf die sich anfangs ständig verändernde Reformatmenge reagieren, so dass das Reformat vollständig im Brenner verbrannt wird. Dadurch verringert sich der Bedarf des Brenners 4 an Erdgas. Entscheidend ist, dass das System auf diese Weise flexibel auf eine Veränderung der im Stack umgesetzten Wasserstoffmenge reagieren kann, ohne dass brennbares Gas (Reformat, Anodenrestgas) aus dem System herausgeführt werden muss (ansonsten besteht das Problem der Einleitung brennbarer Gase in den Kamin oder in den Heizungs-Aufstellungsraum). Die Rampenfunktion ist vorteilhaft für die Luftzahlregelung des Brenners, damit keine abrupten Änderungen der Brenngaszusammensetzung des Brenners (Mischung aus Erdgas und Reformat) auftreten, die die Regelung stören würden.

Sobald der Erdgasmassenstrom nach Abschluss der Rampenfunktion konstant ist, kann der Stack elektrischen Strom liefern, womit die Aufheizphase abgeschlossen ist. Sobald der Stack Strom liefert, enthält das Anodenrestgas in der Rückführleitung zum Brenner 4 weniger Wasserstoff als das Reformat in Leitung zum Stack, was wiederum durch die Luftzahlregelung des Brenners ausgeglichen wird. Die für den Stackbetrieb notwendige Luftmenge wird mittels des Luftgebläses 14 gefördert. Dazu verbindet das Ventil 13 das Gebläse 14 mit dem Stack. Die sauerstoffabgereicherte Luft, die den Stack über die Leitung 17 verlässt, wird dem Brennerabgas (und letztlich einem Kamin) zugeführt.

### Abschaltverfahren

Grundsätzlich läuft das Herunterfahren in umgekehrter Reihenfolge wie das Aufheizen des Systems ab.

Da sich beim Abschalten des Systems (d. h. die Prozess-Erdgasdosierung wird gestoppt, die Heizungen 17 und 18 werden abgeschaltet, ebenso die Strom-Anforderung an den Stack) brennbare Gase (Erdgas, H₂ und Mischungen davon) im GES befinden, wird, wie während des Wasserdampfspülens beim Aufheizvorgang, ausschließlich Wasserdampf in das noch auf Betriebstemperatur befindliche GES dosiert. Gleichzeitig wird wieder der Stack-By pass geöffnet (Ventil 12 öffnen, Ventile 10 und 11 schließen). Das im GES befindliche brennbare Gas wird durch den Wasserdampf aus dem GES verdrängt und strömt in den Brenner, wo es verbrannt wird, so dass kein brennbares Gas aus dem System nach außen abgeführt werden muss. Wenn der Wasserdampf das im GES befindliche brennbare Gas verdrängt hat (annähernd nach der gleichen Zeit wie oben, wenn der Wassermassenstrom identisch ist mit der Wasserdampf-Spülphase des Aufheizvorgangs), wird die Wasserdampfdosierung und der Brennerbetrieb gestoppt.

Eine sofortige Luftdosierung in das GES beim Abschalten des Systems würde zu einer Vermischung von Luft und den im GES befindlichen brennbaren Gasen (s. o.) innerhalb des noch auf Betriebstemperatur aufgeheizten GES führen. Durch die hohe Temperatur und die Oxidationsaktivität der Edelmetallkatalysatoren würde dies zu einer spontanen Entzündung/Oxidation der brennbaren Gase führen, was wiederum zum einem Temperaturenstieg in den Katalysatoren führen würde, der die Katalysatoren schädigen könnte.

Bezüglich der sich an die Wasserdampfspülung anschließenden Lüftspülung ist entscheidend, das System vor dem Abkühlen auf Umgebungstemperatur "trocken" zu fahren, also frei von Wasserdampf. Der Wasserdampf, der sich nach Beendigung der Wasserdampfspülung im GES befindet, würde beim Abkühlen des Systems innerhalb des GES kondensieren, sobald dort die Temperatur von 100°C (druckabhängig) unterschritten wird, mit den bereits erwähnten möglichen Schädigungen der Katalysatoren durch flüssiges Wasser.

Zur Luftspülung des GES wird das Luftgebläse 14 eingeschaltet und das 3/2-Wege Ventil 13 auf die Reformerzuführung geschaltet. Nun strömt Luft in das wasserdampfgefüllte GES und verdrängt dort den Wasserdampf. Der Dampf wird im Bypass am Stack vorbei und in den Brenner geleitet, wobei wieder ein Kondensieren des Dampfes vor dem Eintritt in den Brenner möglich ist (mittels Kondensator/Tropfenabscheider, s. o.), um eine Beaufschlagung des Brenners mit unter Umständen kondensierendem Wasserdampf zu vermeiden.

Die für die Verdrängung des Wasserdampfs nötige Zeit hängt vom Spülluftmassenstrom und der mittleren GES-Temperatur ab; diese Zeit liegt typischerweise bei 3-10 Minuten, je nach Leistung des Luftgebläses und Druckverlust des GES. Nach dieser Zeit ist das GES von Wasserdampf befreit und die Luftdosierung wird gestoppt. Jetzt kann das System vollständig abkühlen, ohne dass die Gefahr der Katalysatorschädigung durch Kondensat/flüssiges Wasser besteht.

### Bezugszeichenliste

- 1: Reformer
- 2: Katalysatorstufe
- 3: Brennstoffzelle
- 4: Reformerbrenner
- 5: Dampfgenerator
- 6: Wärmetauscher
- 7: Förderkomponente
- 8: Shiftstufe
- 9: Methanisierungsstufe
- 10: Ventil
- 11: Ventil
- 12: Ventil
- 13: Ventil
- 14: Förderkomponente
- 15: elektrische Heizung
- 16: elektrische Heizung
- 17: Leitung

- A: erste Startphase
- B: zweite Startphase
- C: dritte Startphase
- D: vierte Startphase

- X: erste Abschaltphase
- Y: zweite Abschaltphase
- Z: dritte Abschaltphase

## Patentansprüche

1. Verfahren zum Starten einer Brennstoffzellenanlage, bei dem im stationären Betrieb
- einem Reformer (1) Kohlenwasserstoffgas und Wasserdampf als Edukte zur Umwandlung in Wasserstoff und weitere Reformer-Produkte,
- die Reformer-Produkte zur chemischen Aufbereitung mindestens einer dem Reformer (1) nachgeschalteten Katalysatorstufe (2),
- der Wasserstoff und Luft einer der Katalysatorstufe (2) nachgeschalteten Brennstoffzelle (3) zugeführt werden,
**dadurch gekennzeichnet,**
**dass** zum Starten der Brennstoffzellenanlage dem Reformer (1) und der Katalysatorstufe (2)
- in einer ersten Startphase (A) ausschließlich erwärmte Luft,
- in einer zweiten Startphase (B) neben der Luft auch Wasserdampf,
- in einer dritten Startphase (C) ausschließlich Wasserdampf,
- und in einer vierten Startphase (D) zum Übergang in den stationären Betrieb Kohlenwasserstoffgas und Wasserdampf
zugeführt wird.

2. Verfahren nach Anspruch 1,
**dadurch gekennzeichnet,**
**dass** während der ersten (A) bis dritten Startphase (C) die Luft und der Wasserdampf an der Brennstoffzelle (3) vorbeigeführt werden.

3. Verfahren nach Anspruch 2,
**dadurch gekennzeichnet,**
**dass** während der ersten (A) bis dritten Startphase (C) an der Brennstoffzelle (3) vorbeigeführte Luft und Wasserdampf einem Reformerbrenner (4) zugeführt werden.

4. Verfahren nach einem der Ansprüche 1 bis 3,
**dadurch gekennzeichnet,**
**dass** der Wasserstoff frühestens mit Beginn der vierten Startphase (D) der Brennstoffzelle (3) zugeführt wird.

5. Verfahren nach Anspruch 4,
**dadurch gekennzeichnet,**
**dass** der Wasserstoff ab Ende der vierten Startphase (D) der Brennstoffzelle (3) zugeführt wird.

6. Verfahren nach einem der Ansprüche 1 bis 5,
**dadurch gekennzeichnet,**
**dass** die Brennstoffzelle (3) spätestens mit Beginn der vierten Startphase (D) separat auf Betriebstemperatur vorgeheizt wird.

7. Verfahren nach einem der Ansprüche 1 bis 6,
**dadurch gekennzeichnet,**
**dass** die mindestens eine Katalysatorstufe (2) mit einer elektrischen Heizung (8, 9) aufgeheizt wird.

## Claims

1. A method for starting a fuel cell system, in which, in stationary operation
- hydrocarbon gas and water steam are supplied as educts to a reformer (1) for conversion into hydrogen and further reformer products,
- the reformer products are supplied to at least one catalyst stage (2), which is connected downstream from the reformer (1), for chemical preparation,
- the hydrogen and air are supplied to a fuel cell (3) connected downstream from the catalyst stage (2),
**characterized in**
**that**, for starting the fuel cell system,
- in a first starting phase (A), exclusively heated air is supplied,
- in a second starting phase (B), in addition to the air, water steam is also supplied,
- in a third starting phase (C), exclusively water steam is supplied,
- and in a fourth starting phase (D), for the transition into the stationary operation, hydrocarbon gas and water steam are supplied to the reformer (1) and the catalyst stage (2).

2. The method according to Claim 1,
**characterized in**
**that** the air and the water vapor are guided past the fuel cell (3) during the first (A) to the third starting phases (C).

3. The method according to Claim 2,
**characterized in**
**that** air and water steam which are guided past the fuel cell (3) during the first (A) to the third starting phases (C) are supplied to a reformer burner (4).

4. The method according to one of Claims 1 to 3,
**characterized in**
**that** the hydrogen is supplied to the fuel cell (3) at earliest at the beginning of the fourth starting phase (D) .

5. The method according to Claim 4,
**characterized in**
**that** the hydrogen is supplied to the fuel cell (3) from the end of the fourth starting phase (D).

6. The method according to one of Claims 1 to 5,
**characterized in**
**that** the fuel cell (3) is separately preheated to operating temperature at latest at the beginning of the fourth starting phase (D).

7. The method according to one of Claims 1 to 6,
**characterized in**
**that** the at least one catalyst stage (2) is heated using an electrical heater (8, 9).

## Revendications

1. Procédé destiné au démarrage d'une installation de pile à combustible,
dans lequel, en fonctionnement fixe, sont amenés,
- du gaz hydrocarboné et de la vapeur d'eau à un reformeur (1) en tant que produits de départ pour la conversion en hydrogène et d'autres produits du reformeur,
- au moins à un étage de catalyseur (2) monté en aval du reformeur (1), les produits du reformeur pour la préparation chimique,
- à une pile à combustible (3) montée en aval de l'étage de catalyseur (2), l'hydrogène et de l'air,
**caractérisé en ce que** pour démarrer l'installation de pile à combustible, sont amenés au reformeur (1) et à l'étage de catalyseur (2)
- exclusivement de l'air réchauffé dans une première phase de démarrage (A),
- de la vapeur d'eau outre l'air dans une deuxième phase de démarrage (B),
- exclusivement de la vapeur d'eau dans une troisième phase de démarrage (C),
- du gaz hydrocarboné et de la vapeur d'eau dans une quatrième phase de démarrage (D) pour le passage au fonctionnement fixe.

2. Procédé selon la revendication 1,
**caractérisé en ce que**
de la première (A) à la troisième (C) phase, l'air et la vapeur d'eau sont amenés devant la pile à combustible (3).

3. Procédé selon la revendication 2,
**caractérisé en ce que**
l'air et la vapeur d'eau amenés devant la pile à combustible (3) de la première (A) à la troisième (C) phase sont amenés vers un brûleur de reformeur (4).

4. Procédé selon l'une des revendications 1 à 3,
**caractérisé en ce que**
l'hydrogène est transporté au plus tôt au début de la quatrième phase de démarrage (D) de la pile à combustible (3).

5. Procédé selon la revendication 4,
**caractérisé en ce que**
l'hydrogène est transporté à partir de la fin de la quatrième phase de démarrage (D) de la pile à combustible (3).

6. Procédé selon l'une des revendications 1 à 5,
**caractérisé en ce que**
la pile à combustible (3) est pré-chauffée séparément à la température de service, au plus tard au début de la quatrième phase de démarrage (D).

7. Procédé selon l'une des revendications 1 à 6,
**caractérisé en ce que**
l'au moins un étage de catalyseur (2) est chauffé avec un chauffage électrique (8, 9).
